(19)

**Europäisches Patentamt**
**European Patent Office**
**Office européen des brevets**

(11) **EP 4 749 704 A1**

(12) **EUROPEAN PATENT APPLICATION**
published in accordance with Art. 153(4) EPC

(43) Date of publication:
**27.05.2026 Bulletin 2026/22**

(21) Application number: **24873031.9**

(22) Date of filing: **27.09.2024**

(51) International Patent Classification (IPC):
$H01M\ 4/131^{(2010.01)}$    $H01M\ 4/62^{(2006.01)}$
$H01M\ 4/525^{(2010.01)}$    $H01M\ 4/505^{(2010.01)}$
$H01M\ 10/052^{(2010.01)}$    $H01M\ 4/02^{(2006.01)}$

(52) Cooperative Patent Classification (CPC):
**H01M 4/02; H01M 4/131; H01M 4/505;**
**H01M 4/525; H01M 4/62; H01M 10/052;**
**Y02E 60/10**

(86) International application number:
**PCT/KR2024/014710**

(87) International publication number:
**WO 2025/071323 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.09.2023 KR 20230131251**

(71) Applicant: **LG Energy Solution, Ltd.**
**Seoul 07335 (KR)**

(72) Inventors:
• **KIM, Young Jae**
**Daejeon 34122 (KR)**
• **PARK, Joo Yong**
**Daejeon 34122 (KR)**
• **LIM, Han Min**
**Daejeon 34122 (KR)**
• **PARK, Sang Hyun**
**Daejeon 34122 (KR)**
• **KIM, Cho Won**
**Daejeon 34122 (KR)**
• **KIM, Tae Gon**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE AND LITHIUM SECONDARY BATTERY COMPRISING SAME**

(57) The present invention relates to a positive electrode having a positive electrode composite layer, including a positive electrode active material, carbon nanotubes, and carbon black, disposed on a current collector, wherein a ratio $(BET_{CB})/(BET_{CNT})$ of a BET surface area $BET_{CB}$ of the carbon black to a BET surface area $BET_{CNT}$ of the carbon nanotubes is greater than 1.0 and 3.4 or less, and the carbon nanotubes have a number cumulative average particle size $D_{50}^{CNT}$ of 0.9 $\mu$m to 2.0 um, and a positional relationship between the carbon nanotubes and the carbon black within the positive electrode and connectivity with active material particles are excellent, and thus both ionic conductivity and electrical conductivity are improved, thereby providing a lithium secondary battery offering superior resistance, improved lifespan, and price competitiveness.

EP 4 749 704 A1

**Description**

## TECHNICAL FIELD

The present invention relates to a positive electrode for a lithium secondary battery and a lithium secondary battery including the same, and more particularly, to a positive electrode having a conductive material optimized for conductivity and a lithium secondary battery including the same.

## BACKGROUND ART

Lithium secondary batteries are typically provided with a positive electrode, a negative electrode, a separator, and an electrolyte, and the positive electrode and the negative electrode include active materials enabling intercalation/deintercalation of lithium ions.

lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. Among those listed above, the lithium cobalt oxide has high operating voltage and excellent capacity characteristics, but it is difficult to commercially apply the lithium cobalt oxide to large-capacity batteries because cobalt, which is a raw material of the lithium cobalt oxide, is expensive and unstably supplied. The lithium nickel oxide has poor structural stability, and thus is hardly provided with sufficient lifespan. Meanwhile, the lithium manganese oxide has excellent stability but comes with poor capacity. Accordingly, lithium nickel-based oxides including at least two types of transition metals have been developed to compensate for the limitations of lithium transition metal oxides including Ni, Co, or Mn alone, and particularly, lithium nickel cobalt manganese oxides including Ni, Co, and Mn have been widely used in the field of batteries for electric vehicles.

Meanwhile, in addition to using a high-capacity positive electrode active material, materials included in the positive electrode are of vital importance for achieving batteries with high energy density. To this end, research efforts are underway to make the most use of active material and to make the least use of conductive material and binder. However, when an amount of active material used increases, the corresponding increase in cell cost is disproportionately large relative to improvement in performance, making it difficult to apply this approach to mass production.

Consequently, a recent research trend has been to achieve a specific energy density or higher along with enhanced price competitiveness.

Meanwhile, carbon nanotubes (CNTs) are commonly used as conductive materials in the positive electrode. This is because CNTs have greater conductivity and length properties than carbon black, which promotes the formation of a conductive network. Particularly, single-walled carbon nanotubes (SWCNTs) are desirable for forming conductive networks, but offer poor dispersibility and high cost, and thus are not desirable in terms of price competitiveness despite superior performance thereof, and multi-walled carbon nanotubes (MWCNTs) also are not desirable in terms of economic feasibility and induce damage or breakage of active material during electrode rolling.

Therefore, the present invention aims to provide a positive electrode composition offering price competitiveness and exhibiting greater performance than cells using CNTs as a conductive material.

## DISCLOSURE OF THE INVENTION

## TECHNICAL PROBLEM

The present invention is designed to overcome the limitations described above, and thus, an aspect of the present invention provides a positive electrode capable of improving both electrical conductivity and ionic conductivity by enhancing a positional relationship and interparticle connectivity between carbon nanotubes and carbon black.

Another aspect of the present invention provides a lithium secondary battery offering superior resistance, improved lifespan, and price competitiveness by including the positive electrode described above.

## TECHNICAL SOLUTION

[1] According to an aspect of the present invention, there is provided a positive electrode having a positive electrode composite layer, including a positive electrode active material, carbon nanotubes, and carbon black, disposed on a current collector, and satisfying Equation 1 below, wherein the carbon nanotubes have a number cumulative average particle size $D_{50}^{CNT}$ of 0.9 $\mu$m to 4.0 $\mu$m.

[Equation 1]

$$1.0 < (BET_{CB})/(BET_{CNT}) \leq 3.4$$

In Equation 1 above, $BET_{CB}$ is a BET specific surface area ($m^2/g$) of carbon black, and $BET_{CNT}$ is a BET specific surface area ($m^2/g$) of carbon nanotubes.

[2] The present invention provides the positive electrode according to [1] above, wherein in Equation 1 above, $(BET_{CB})/(BET_{CNT})$ may range from 1.1 to 3.0.

[3] The present invention provides the positive electrode according to [1] or [2] above, wherein $BET_{CB}$ may range from 110 $m^2/g$ to 350 $m^2/g$.

[4] The present invention provides the positive electrode according to at least one of [1] to [3] above, wherein $BET_{CNT}$ may range from 100 $m^2/g$ to 250 $m^2/g$.

[5] The present invention provides the positive electrode according to at least one of [1] to [4] above, wherein the carbon black may have a number cumulative average particle size $D_{50}^{CB}$ of 0.8 $\mu$m to 1.5 $\mu$m.

[6] The present invention provides the positive electrode according to at least one of [1] to [5] above, wherein the carbon nanotubes and the carbon black may be provided in a weight ratio of 85:15 to 55:45.

[7] The present invention provides the positive electrode according to at least one of [1] to [6] above, wherein the positive electrode active material may be a single particle-type positive electrode active material, and the single particle-type positive electrode active material may include at least one selected from the group consisting of a lithium nickel-based oxide and a lithium metal phosphate-based compound.

[8] The present invention provides the positive electrode according to at least one of [1] to [7] above, wherein the positive electrode active material may be a single particle-type positive electrode active material including 30 or fewer nodules, and the nodules may have an average particle size $D_{mean}$ of 0.2 $\mu$m to 3.0 $\mu$m.

[9] The present invention provides the positive electrode according to at least one of [1] to [8] above, wherein the positive electrode active material may be a single particle-type positive electrode active material including 30 or fewer nodules, and a $D_{50}/D_{mean}$ ratio may range from 1 to 10, where $D_{50}/D_{mean}$ is defined as a ratio of volume cumulative average particle size $D_{50}$ to average particle size $D_{mean}$ of nodules.

[10] The present invention provides the positive electrode according to at least one of [1] to [9] above, wherein the positive electrode active material may include a single particle-type lithium nickel-based oxide, and the single particle-type lithium nickel-based oxide may have a composition represented by Formula 1 below.

[Formula 1]     $Li_{1+x}Ni_aCo_bM^1_cM^2_dO_{2-e}X_e$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0\leq x\leq 0.1$, $0.5\leq a<1$, $0<b\leq 0.35$, $0<c\leq 0.35$, $0\leq d\leq 0.05$, and $0\leq e\leq 0.05$.

[11] The present invention provides the positive electrode according to at least one of [1] to [10] above, wherein the positive electrode active material may include a lithium metal phosphate-based compound, and the lithium metal phosphate-based compound may have a composition represented by Formula 2 below.

[Formula 2]     $Li_{1+x}[Fe_{1-y}M_y]PO_4$

In Formula 2 above, M includes at least one selected from the group consisting of Mn, Co, Ni, Al, Mg, and Ti, and x and y satisfy $-0.5\leq x\leq 0.5$ and $0\leq y<1$.

[12] The present invention provides the positive electrode according to at least one of [1] to [11] above, wherein the carbon nanotubes and the carbon black may be provided in a total amount of 0.4 wt% to 2.5 wt% with respect to a total weight of the positive electrode composite layer.

[13] The present invention provides the positive electrode according to at least one of [1] to [12] above, wherein the positive electrode active material may be provided in an amount of 93.0 wt% to 99.0 wt% with respect to a total weight of the positive electrode composite layer.

[14] The present invention provides the positive electrode according to at least one of [1] to [13] above, wherein the positive electrode composite layer may further include a binder.

[15] According to another aspect of the present invention, there is provided a lithium secondary battery including the positive electrode according to at least one of [1] to [14] above.

## ADVANTAGEOUS EFFECTS

A positive electrode according to the present invention improves a positional relationship and connectivity between carbon nanotubes disposed on a surface of positive electrode active material particles and connecting the particles with each other and carbon black disposed between the particles and preserving an electrolyte in pores, and thus forms a dense conductive network through the carbon nanotubes while preserving the electrolyte in the pores between the active material particles through the carbon black, thereby improving both electrical conductivity and ionic conductivity.

In addition, a lithium secondary battery including the positive electrode may offer excellent resistance, improved lifespan, and price competitiveness by applying carbon nanotubes and carbon black having the above-described characteristics.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Herein, the term "single particle type" indicates a particle consisting of 30 nodules or less, and a single particle type particle encompasses a single particle consisting of a single nodule as well as a quasi-single particle which is a composite of 2 to 30 nodules.

The term "nodule" indicates a lower particle unit body constituting a single particle and a quasi-single particle, and may be a single crystal lacking crystalline grain boundaries or may be a polycrystal in which grain boundaries are not present when observed in a field of view of $5000\times$ to $20000\times$ using a scanning electron microscope.

Herein, the term "secondary particle" indicates a particle formed by aggregation of a plurality several tens to several hundreds of primary particles. More specifically, the secondary particle is an aggregate of at least 50 primary particles.

Herein, when the term "particle" is described, any one or all of a single particle, a quasi-single particle, a primary particle, a nodule, and a secondary particle may be encompassed.

Herein, an "average particle size of nodules ($D_{mean}$)" is calculated by taking an average value of the particle sizes of individual nodules in approximately 30 particles containing at least one nodule, as determined by scanning electron microscopy (SEM) of positive electrode active material particles.

Herein, the term "volume cumulative average particle size ($D_{50}$)" indicates a particle size with respect to 50% in the volume accumulated particle size distribution of positive electrode active material powder. The volume cumulative average particle size $D_{50}$ may be measured using a laser diffraction method. For example, the volume cumulative average particle size $D_{50}$ may be measured in a way that the positive electrode active material powder is dispersed in a dispersion medium, the dispersion medium is introduced into a commercial laser diffraction particle size measurement instrument to obtain a volume accumulated particle size distribution graph, and the particle size at 50% of the volume accumulation is calculated.

Herein, the term "number cumulative average particle size $D_{50}^{CNT}$, $D_{50}^{CB}$" indicates a particle size with respect to 50% in the number cumulative particle size distribution of carbon nanotubes and carbon black. The number cumulative average particle size may be measured using a laser diffraction method. For example, the number cumulative average particle size may be measured in a way that conductive material powder is dispersed in a dispersion medium, the dispersion medium is introduced into a commercial laser diffraction particle size measurement instrument to obtain a graph of number cumulative particle size distribution excluding volume, and the particle size at 50% of the number accumulation is calculated.

Herein, a "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

Hereinafter, the present invention will be described in more detail.

A positive electrode and a lithium secondary battery according to the present invention may include at least one of the following components, and may include any combination of technically feasible components among the following components.

## Positive electrode

A positive electrode according to the present invention has a positive electrode composite layer, including a positive electrode active material, carbon nanotubes, and carbon black, disposed on a current collector, and satisfies Equation 1 below, wherein the carbon nanotubes have a number cumulative average particle size $D_{50}^{CNT}$ of 0.9 $\mu$m to 4.0 $\mu$m.

$$[\text{Equation 1}]$$

$$1.0 < (\text{BET}_{CB})/(\text{BET}_{CNT}) \leq 3.4$$

In Equation 1 above, $\text{BET}_{CB}$ is a BET specific surface area ($m^2/g$) of carbon black, and $\text{BET}_{CNT}$ is a BET specific surface area ($m^2/g$) of carbon nanotubes.

*(BET-CB)* / *(BET-CNT) in Equation 1*

According to an embodiment of the present invention, the positive electrode has a positive electrode composite layer including a positive electrode active material, carbon nanotubes as a linear conductive material, and carbon black as a point-type conductive material, disposed on a current collector, and a ratio of a specific surface area of the carbon black to a specific surface area of the carbon nanotubes indicated by Equation 1 is greater than 1.0 and 3.4 or less.

Typically, in an electrode, carbon black is most commonly used as a conductive material, but when the commonly used carbon black is not included in a certain amount or more, conductivity is hardly achieved, failing to obtain a battery exhibiting high energy density.

Accordingly, a method of reducing the proportion of the conductive material and increasing the proportion of the active material to replace carbon black is being considered, but mostly, methods of manufacturing electrodes such as the method described above induce degradation in price competitiveness of batteries and thus are hardly applicable to mass production. For example, carbon nanotubes are applied as the conductive material to reduce the proportion of the conductive material, and single-walled carbon nanotubes having a large surface area are required to achieve conductivity through a small amount of carbon nanotubes, but the single-walled carbon nanotubes require a high level of dispersion process, mainly causing degradation in price competitiveness.

Therefore, the inventors of the present invention intend to provide a positive electrode composite layer capable of achieving improved ion conductivity and a conductive network with a small amount of conductive material without using single-walled carbon nanotubes by maximizing the conductive performance of the conductive material.

According to an embodiment of the present invention, a ratio $(\text{BET}_{CB})/(\text{BET}_{CNT})$ of a BET specific surface area $\text{BET}_{CB}$ of carbon black to a BET specific surface area $\text{BET}_{CNT}$ of carbon nanotubes, indicated by Equation 1 above, is greater than 1.0 and 3.4 or less. Typically, carbon nanotubes have a linear one-dimensional structure and a relatively large specific surface area, and carbon black has a point-type three-dimensional structure and a relatively small specific surface area.

When these two conductive materials, carbon nanotubes and carbon black are mixed, the number of carbon nanotubes is greater than that of carbon black at the same weight, which may prevent both conductive materials from being optimally positioned within an electrode. For example, carbon nanotubes are supposed to connect active materials or bind to a surface of an active material which is a large particle composed of small particles aggregated together to connect the smaller particles. However, the carbon nanotubes are in large quantity and thus are more likely to be disposed in the pores between active materials, failing to perform functions thereof, and the carbon nanotubes are relatively thin and long, and may thus be cut or damaged during charging and discharging, leading to increased resistance. In addition, carbon black is desirably disposed in the pores between active materials or serves as a hub for connecting carbon nanotubes. However, the carbon nanotubes may prevent the carbon black from being disposed in the pores but may force the carbon black to be disposed on a surface of active materials, and accordingly, the carbon black may not significantly contribute to improving conductivity.

In the positive electrode according to an embodiment of the present invention, the specific surface area of the carbon black is, conversely, larger than the specific surface area of the carbon nanotubes. When configuring a conductive material in this way, the carbon nanotubes may have a relatively large diameter and a relatively short length due to the relatively small specific surface area thereof, and thus, when forming a conductive network by connecting active material particles and particles, there is less concern over the breakage of the conductive network even under high pressure rolling, and strong interparticle connectivity may be maintained. In addition, the carbon black has a relatively large specific surface area and thus is more likely to be disposed in pores formed between active material particles, and has a great ability to retain an electrolyte through a large specific surface area and may thus serve to improve ion conductivity in vacant spaces such as pores.

That is, when the specific surface area of carbon nanotubes is larger than that of carbon black, that is, when the ratio according to Formula 1 above is 1 or less, there is concern that the carbon nanotubes may prevent the carbon black from being disposed in the pores between active material particles, resulting in reduced ion conductivity, and the carbon nanotubes may have greater cohesive force and thus be hardly dispersed and not be uniformly distributed. In addition, the ratio according to Formula 1 above of greater than 3.4 indicates that the carbon nanotubes may fail to form a conductive path efficiently, and the carbon black has a high specific surface area, suggesting a relatively large quantity, and the carbon black has lower purity than the carbon nanotubes, causing an increase in side reactions.

The ration of specific surface area determined by Equation 1 above may preferably be 1.1 or more, 1.2 or more, or 1.3 or more, and further 3.3 or less, 3.1 or less, 3.0 or less, 2.8 or less, 2.6 or less, or 2.4 or less.

_Conductive materials: Carbon nanotubes and carbon black_

According to an embodiment of the present invention, the carbon nanotubes may have a number cumulative average particle size $D_{50}^{CNT}$ of 0.9 $\mu$m to 4.0 $\mu$m. The number cumulative average particle size of carbon nanotubes is derived from a distribution by particle size according to number only without considering the volume, unlike volume cumulative average particle size, and by considering both the BET ratio and the number cumulative average particle size, the impact of the number of conductive material particles on electrode performance may be more accurately considered. Accordingly, the carbon nanotubes may preferably have a number cumulative average particle size of 0.95 $\mu$m or greater, 1.00 $\mu$m or greater, 1.05 $\mu$m or greater, 1.10 $\mu$m or greater, or 1.15 $\mu$m or greater, and a number cumulative average particle size of 3.70 $\mu$m or less, 3.40 $\mu$m or less, 3.00 $\mu$m or less, 2.50 $\mu$m or less, or 2.00 $\mu$m or less. When the above range is satisfied, the carbon nanotubes may be readily disposed in the pores of the positive electrode, reducing the porosity of the positive electrode and subsequently contributing to achieving a high energy density electrode.

Meanwhile, the carbon nanotubes may be single-walled carbon nanotubes, multi-walled carbon nanotubes, or a mixture thereof, and may preferably be multi-walled carbon nanotubes, but the application of single-walled or a mixture of single-walled and multi-walled carbon nanotubes is not precluded when satisfying the specific surface area ratio with respect to the subsequently described carbon black.

In addition, according to an embodiment of the present invention, the carbon nanotubes may have a BET specific surface area of 100 m$^2$/g to 300 m$^2$/g measured through a BET method, and specifically may be calculated from an amount of nitrogen gas adsorbed at a liquid nitrogen temperature (77 K) using BELSORP-mino II from BEL JAPAN, INC. Preferably, the carbon nanotubes may have a BET specific surface area of 130 m$^2$/g or more, 150 m$^2$/g or more, 160 m$^2$/g or more, 170 m$^2$/g or more, 180 m$^2$/g or more, or 185 m$^2$/g or more, and further 290 m$^2$/g or less, 280 m$^2$/g or less, 275 m$^2$/g or less, 270 m$^2$/g or less, or 265 m$^2$/g or less. When the above range is satisfied, the carbon nanotubes may have the ability to form a conductive network through connection of active material particles within the positive electrode, thereby improving electrical conductivity and subsequently contributing to improving resistance characteristics and lifespan characteristics.

In addition, the positive electrode according to an embodiment of the present invention may include carbon black as a point-type conductive material, and the carbon black may be at least one selected from the group consisting of acetylene black, Ketjen black, channel black, furnace black, lamp black, and thermal black.

According to an embodiment of the present invention, the carbon black may have a BET specific surface area of 110 m$^2$/g to 350 m$^2$/g measured through a BET method, and specifically may be calculated from an amount of nitrogen gas adsorbed at a liquid nitrogen temperature (77 K) using BELSORP-mino II from BEL JAPAN, INC. Preferably, the carbon black may have a BET specific surface area of 130 m$^2$/g or more, 150 m$^2$/g or more, 170 m$^2$/g or more, 200 m$^2$/g or more, 220 m$^2$/g or more, 240 m$^2$/g or more, 260 m$^2$/g or more, or 280 m$^2$/g or more, and further 340 m$^2$/g or less, 330 m$^2$/g or less, 325 m$^2$/g or less, 320 m$^2$/g or less, 310 m$^2$/g or less, or 305 m$^2$/g or less. When the above range is satisfied, the carbon black may be readily disposed in the pores of the positive electrode, and may have a sufficient ability to retain an electrolyte in the pores, thereby contributing to improving ion conductivity, and thus improvement in resistance characteristics and lifespan characteristics may be expected.

According to an embodiment of the present invention, the carbon black may have a number cumulative average particle size $D_{50}^{CB}$ of 0.2 $\mu$m to 1.2 um, preferably 0.3 $\mu$m or more, 0.4 $\mu$m or more, 0.5 $\mu$m or more, or 0.6 $\mu$m or more, and further 1.1 $\mu$m or less, 1.0 $\mu$m or less, or 0.9 $\mu$m or less. When the above range is satisfied, the carbon nanotubes may be readily disposed in the pores of the positive electrode, reducing the porosity of the positive electrode and subsequently contributing to achieving a high energy density electrode.

According to an embodiment of the present invention, the carbon nanotubes and the carbon black may be provided in a weight ratio of 85:15 to 55:45. The weight ratio between the input amount of carbon nanotubes and the input amount of carbon black may be independent of the ratio of the specific surface area represented by Equation 1 described above, and when the above range is satisfied, both ion conductivity and electrical conductivity may be achieved, and thus improved resistance characteristics and lifespan characteristics may be achieved. Preferably, the carbon nanotubes and the carbon black may be provided in a weight ratio of 80:20 or less, or 75:25 or less, 60:40 or more, or 65:35 or more.

_Positive electrode active material_

According to an embodiment of the present invention, the positive electrode active material may be a single particle-type positive electrode active material. the positive electrode active material may have a single particle formation

degree $D_{50}/D_{mean}$ of 1 to 10. The single particle-type positive electrode active material has greater particle strength than typical secondary particle-type positive electrode active materials in which tens to hundreds of primary particles are aggregated, thereby less particle breakage during rolling. In addition, since the single particle-type positive electrode active material according to the present invention has a small number of sub-parts (i.e., nodules) constituting particles, changes resulting from the volume expansion/contraction of primary particles during charging and discharging are small, and accordingly, the generation of cracks inside the particles is substantially reduced.

A lower single particle formation degree may imply a smaller number of nodules constituting the particle. Accordingly, the single particle formation degree may preferably range from 1 to 8, 1 to 7, 1 to 6, or 1 to 5, and when the above range is satisfied, particle breakage may be reduced and rolling density may be improved, and thus both lifespan characteristics and energy density may be expected to be improved.

When the positive electrode active material is a single particle-type positive electrode active material, it is preferable in that carbon black may be disposed in pores and a network between carbon nanotube particles may be formed, and the effect may be exerted according to the ratio range of specific surface area.

In addition, unlike the secondary particle form, fine particles generated by particle breakage are in a trace amount, and thus carbon black may be located in most of the pores, and accordingly, the effect of improving ion conductivity by preserving an electrolyte may be expected.

In addition, the single particle type has a relatively smaller specific surface area than secondary particles, and thus a spot for the conductive network that need to be formed through carbon nanotubes may be unnecessary, and accordingly, it may be considered that the performance gained from using carbon nanotubes with a large specific surface area is not obtainable, and the function may be maximized with the carbon nanotube having the specific surface area as described in the present invention, and accordingly, even with a relatively small specific surface area, the single particle type may maximize the effect of improving conductivity at a small amount.

Therefore, the positive electrode active material according to an embodiment of the present invention may preferably be a single particle-type positive electrode active material, and in the case, the effect of satisfying the specific surface area relationship between the two conductive materials, as defined by Equation 1 described above, may result in a greater synergistic effect.

According to an embodiment of the present invention, the positive electrode active material may have a volume cumulative average particle size $D_{50}$ of 2.0 μm to 6.0 μm.

The positive electrode active material may have an average particle size at 50% cumulative volume of 2.0 μm to 6.0 μm, preferably 2.3 μm or more, 2.5 μm or more, 2.7 μm or more, 3.0 μm or more, or 3.5 μm or more, and may be 6.0 μm or less, 5.8 μm or less, 5.5 μm or less, or 5.0 μm or less. When the volume cumulative average particle size $D_{50}$ of the positive electrode active material satisfies the above range, rolling density may be increased without breakage of active material particles.

According to an embodiment of the present invention, the positive electrode active material may include 30 or fewer nodules, and the nodules may have an average particle size ($D_{mean}$) of 0.2 μm to 3.0 μm, and the nodules may preferably have an average particle size of 0.5 μm or more, 0.7 μm or more, or 1.0 μm or more, and an average particle size of 2.8 μm or less, 2.5 μm or less, or 2.0 μm or less, and when the above range is satisfied, the single particle formation degree range may be satisfied, and thus an effect may be expected accordingly.

The positive electrode active material according to the present invention may include at least one selected from the group consisting of a lithium nickel-based oxide and a lithium metal phosphate-based compound, and the lithium nickel-based oxide may have a composition represented by Formula 1 below.

$$[\text{Formula 1}] \qquad Li_{1+x}Ni_aCo_bM^1_cM^2_dO_{2-e}X_e$$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

In Formula 1 above, $M^1$ may be Mn, Al or a combination thereof, preferably Mn or a combination of Mn and Al, and $M^2$ may be at least one selected from the group consisting of Zr, W, Y, Ba, Ca, Ti, Mg, Ta and Nb, preferably at least one selected from the group consisting of Zr, Y, Mg, and Ti, and more preferably Zr, Y, or a combination thereof. Although the $M^2$ element is not necessarily included, when an appropriate amount of the $M^2$ element is included, it may serve to promote grain growth during firing or enhance the stability of a crystal structure. In addition, X is an anion substituted for an oxygen site and may include N, P, S, F, or Cl.

1+x indicates a mole ratio of lithium in the lithium nickel-based oxide, and x may satisfy $0 \leq x \leq 0.1$, $0 \leq x \leq 0.08$, $0 \leq x \leq 0.05$, $0 \leq x \leq 0.03$, or $0 \leq x \leq 0.02$.

a indicates a molar ratio of nickel among total metals excluding lithium in the lithium nickel-based oxide, and may satisfy $0.50 \leq a < 1.00$, $0.60 \leq a \leq 0.99$, $0.70 \leq a \leq 0.99$ or $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

b indicates a mole ratio of nickel among total metals excluding lithium in the lithium nickel-based oxide, and may satisfy $0<b\leq0.35$, $0.01\leq b\leq0.34$, $0.01\leq b\leq0.30$, $0.01\leq b\leq0.25$, $0.01\leq b\leq0.20$, or $0.01\leq b\leq0.15$.

c indicates a mole ratio of $M^1$ among total metals excluding lithium in the lithium nickel-based oxide, and may satisfy $0<c\leq0.35$, $0.01\leq c\leq0.34$, $0.01\leq c\leq0.30$, $0.01\leq c\leq0.25$, $0.01\leq c\leq0.20$, or $0.01\leq c\leq0.15$.

d indicates a mole ratio of $M^2$ element among total metals excluding lithium in the lithium nickel-based oxide and may satisfy $0\leq d\leq0.05$, $0\leq d\leq0.02$, or $0\leq d\leq0.01$.

e indicates a mole ratio of X element among total metals excluding lithium in the lithium nickel-based oxide and may satisfy $0\leq e\leq0.05$, $0\leq e\leq0.02$, or $0\leq e\leq0.01$.

Meanwhile, the lithium nickel-based oxide may further include a coating layer including at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S, on a particle surface.

When a coating layer is provided on a surface of lithium nickel-based oxide particles, contact between an electrolyte and the lithium nickel-based oxide is suppressed by the coating layer, thereby reducing transition metal elution or gas generation resulting from side reactions with the electrolyte.

Preferably, the coating layer may include Co as a coating element. When a coating layer including Co is formed on a surface of single particle-type and/or quasi-single particle-type lithium nickel-based oxide particles, side reactions with an electrolyte may be suppressed and output may be improved.

In addition, the lithium metal phosphate-based compound may have a composition represented by Formula 2 below.

$$[\text{Formula 2}] \qquad Li_{1+x}[Fe_{1-y}M_y]PO_4$$

In Formula 2 above, M includes at least one selected from the group consisting of Mn, Co, Ni, Al, Mg, and Ti, and x and y satisfy $-0.5\leq x\leq0.5$ and $0\leq y<1$.

The lithium metal phosphate-based compound may be doped with M above. In this case, a lattice structure and distance within an olivine crystal structure, which is a crystal structure, are altered, leading to an increase in diffusion of lithium ions, and consequently improving the electrochemical characteristics of batteries including the positive electrode active material.

x may range from -0.5 to 0.5, may preferably be -0.3 or more, -0.1 or more, or 0 or more, and may be 0.5 or less, 0.4 or less, 0.3 or less, 0.2 or less, or 0.1 or less.

y may be 0 or more and less than 1, and may be 0.90 or less, 0.80, or less, 0.70 or less, 0.60 or less, 0.50 or less, 0.40 or less, 0.30 or less, 0.20 or less, 0.10 or less, or 0.05 or less.

The lithium metal phosphate-based compound may be, for example, $LiFePO_4$.

The lithium metal phosphate-based compound according to the present invention may be in the form of a single particle consisting of only one primary particle, or in the form of an irregular secondary particle consisting of 2 to 50 primary particles. In addition, the lithium metal phosphate-based compound may include an olivine structure, and specifically, may be formed of only an olivine structure. The coating layer according to the present invention may be formed not only on the secondary particle but also on the primary particle. That is, the coating layer according to the present invention may be uniformly present on a surface of the primary particle present inside the secondary particle.

The coating layer may include a carbon coating layer having a graphite structure, and the coating layer may have a thickness of 0.5 nm to 5 nm. When the thickness of the coating layer is within the above range, electrical conductivity is improved and also the entry and exit of lithium ions is not hindered. Specifically, the coating layer may have a thickness of 0.5 nm or more, 1.0 nm or more, 1.5 nm or more, 2.0 nm or more, 2.5 nm or more, or 3.0 nm or more, and a thickness of 5.0 nm or less.

The coating layer may be uniformly applied onto a surface of the lithium metal phosphate-based compound. That is, the coating layer may be in the form of a thin film. The coating layer may improve ion conductivity and electronic conductivity during charging and discharging of a battery including a positive electrode active material. The coating layer may contain impurities such as nitrogen, oxygen, and hydrogen in trace amounts in addition to carbon.

The coating layer may be included in an amount of 0.5 wt% to 3 wt% with respect to a total weight of the lithium metal phosphate-based compound so as to improve electrical conductivity and not to hinder the entry and exit of lithium ions.

*Composition of positive electrode*

The positive electrode according to the present invention may include a positive electrode active material and carbon nanotubes and carbon black as a conductive material as described above, and may further include a binder, and the positive electrode active material, the conductive material, and the binder may form a positive electrode composite layer, and the positive electrode composite layer may be formed on a positive electrode current collector.

In this case, the positive electrode active material may be included in an amount of 90 wt% to 99 wt%, more specifically 93 wt% or more, 95 wt% or more, 96 wt% or more, or 97 wt% or more, and 98.5 wt% or less, or 98 wt% or less, with respect to a total weight of the positive electrode composite layer, and may exhibit excellent capacity characteristics when included in the above range.

In addition, the conductive material including carbon nanotubes and carbon black may be included in an amount of 0.4 wt% to 2.5 wt%, preferably 0.5 wt% or more, 0.6 wt% or more, or 0.7 wt% or more, and further 2.4 wt% or less, 2.3 wt% or less, 2.2 wt% or less, 2.1 wt% or less, 2.0 wt% or less, 1.9 wt% or less, 1.8 wt% or less, 1.7 wt% or less, 1.6 wt% or less, or 1.5 wt% or less, with respect to a total weight of the positive electrode composite layer. This amount of conductive material is attributed to the inclusion of a single particle-type lithium nickel-based oxide in the positive electrode according to an embodiment of the present invention and the inclusion of carbon nanotubes and carbon black satisfying the ratio of specific surface area as the conductive material, indicating that improvement in ionic conductivity and electrical conductivity may be achieved even with only a small amount of the conductive material.

According to an embodiment of the present invention, the positive electrode may further include a binder. The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 0.1 wt% to 10 wt%, preferably 0.3 wt% or more, 0.5 wt% or more, 0.7 wt% or more, or 1.0 wt% or more, and further 9.0 wt% or less, 8.5 wt% or less, 8.0 wt% or less, 7.5 wt% or less, 7.0 wt% or less, or 6.5 wt% or less, with respect to a total weight of the positive electrode composite layer.

The positive electrode current collector may include a highly conductive metal and is not particularly limited as long as the positive electrode composite layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 to 500 μm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode may be prepared according to a typical method of preparing a positive electrode except that the positive electrode active material powder described above is used. Specifically, a positive electrode slurry composition prepared by dissolving or dispersing the positive electrode active material powder, and if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

**Lithium secondary battery**

Next, a lithium secondary battery according to the present invention will be described. A lithium secondary battery according to the present invention includes the positive electrode of the present invention described above.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode composite layer positioned on the negative electrode current collector.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used. The negative electrode current collector may typically have a thickness of 3 $\mu$m to 500 $\mu$m, and preferably may have a thickness of 300 $\mu$m or less, 200 $\mu$m or less, 100 $\mu$m or less, or 80 $\mu$m or less. The current collector may have fine irregularities formed on a surface thereof to improve bonding strength with a negative electrode active material. For example, the current collector may be used in various forms such as a film, a sheet, a foil, a net, a porous body, a foam body, and a non-woven fabric body.

A compound capable of reversibly intercalating and deintercalating lithium may be used as the negative electrode active material, and examples thereof may be a carbonaceous material such as artificial graphite, natural graphite, Kish graphite, pyrolytic carbon, meso-carbon microbeads, mesophase pitches, petroleum or coal tar pitch derived cokes, mesophase pitch based carbon fiber, graphitized carbon fiber, amorphous carbon, soft carbon, or hard carbon; a (semi) metallic compound alloyable with lithium such as Si, Al, Sn, Pb, Zn, Bi, In, Mg, Ga, Cd, Si alloy, Sn alloy, or Al alloy; a semi) metallic oxide material which may be doped and dedoped with lithium such as $SiO_b$ (0<b≤2), SnO2, vanadium oxide, and lithium vanadium oxide; a heterogeneous composite material such as Si-C composite or Sn-C composite; or a metal lithium thin film, and any one thereof or a mixture of two or more thereof may be used.

Preferably, the negative electrode active material may include at least one selected from the group consisting of a silicon-based active material, a carbon-based active material, and a silicon-carbon composite active material, and more preferably, the carbon-based active material may include at least one selected from the group consisting of artificial graphite, natural graphite, soft carbon, and hard carbon, the silicon-based active material may include pure Si particles and/or $SiO_b$ (0<b≤2), and the silicon-carbon composite active material may include a Si-C composite. In addition, the negative electrode active material may be a mixed active material in which two or more of the above-described materials are mixed.

The negative electrode active material may be included in an amount of 60 wt% to 99 wt%, preferably 70 wt% or more, 80 wt% or more, 85 wt% or more, 90 wt% or more, and further 98 wt% or less, 97 wt% or less, or 95 wt% or less, with respect to a total weight of the negative electrode composite layer.

The binder is a component for assisting in bonding between a conductive material, an active material, and a current collector, and may typically be added in an amount of an amount of 0.1 wt% to 10 wt% with respect to a total weight of the negative electrode composite layer, and may be included in an amount of 0.2 wt% or more, 0.3 wt% or more, or 0.5 wt% or more, and further 8 wt% or less, or 5 wt% or less. Examples of the binder may include at least one selected from the group consisting of styrene-butadiene copolymer, acrylated styrene-butadiene copolymer, acrylonitrile-butadiene copolymer, acrylonitrile-butadiene-styrene copolymer, acrylic rubber, butyl rubber, polytetrafluoroethylene, polyethylene, polypropylene, ethylene propylene copolymer, polyethylene oxide, polyvinyl pyrrolidone, polyepichlorohydrin, polyphosphazene, polyacrylonitrile, polystyrene, ethylene propylene diene copolymer, polyvinyl pyridine, chlorosulfonated polyethylene, latex, polyester resin, acrylic resin, phenol resin, epoxy resin, and polyvinyl alcohol. Particularly, examples of the binder may include at least one selected from the group consisting of styrene-butadiene copolymer, acrylated styrene-butadiene copolymer, acrylonitrile-butadiene copolymer, acrylonitrile-butadiene-styrene copolymer, carboxymethyl cellulose, hydroxypropylmethyl cellulose, hydroxypropyl cellulose, diacetyl cellulose, cellulose acetate butylate, cellulose acetate propionate, cyanoethyl pullulan, cyanoethyl polyvinyl alcohol, cyanoethyl cellulose, and cyanoethyl sucrose Preferably, carboxymethyl cellulose, hydroxypropylmethyl cellulose, hydroxypropyl cellulose, or a mixture thereof is desirable. The conductive material is a component for further improving conductivity of the negative electrode active material, and may be included in an amount of 10 wt% or less, preferably 5 wt% or less, 3 wt% or less, 2 wt% or less, or 1 wt% or less, and further 0.01 wt% or more, 0.05 wt% or more, 0.08 wt% or more, 0.1 wt% or more, or 0.3 wt% or more, with respect to a total weight of the negative electrode composite layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon-based fibers and metal-based fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

The negative electrode composite layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

In the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

The electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

The electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

## Examples

Hereinafter, examples of the present invention will be described in detail in such a manner that it may easily be performed by a person skilled in the art to which the present invention pertains. The present invention may, however, be embodied in many different forms, and is not limited to examples set forth herein.

## Examples 1a to 4a and Comparative Examples 1a to 8a

A single particle-type lithium nickel-based oxide $LiNi_{0.6}Co_{0.1}Mn_{0.3}O_2$ having a $D_{50}$ of 3.91 $\mu$m and nodules with a $D_{mean}$ of 2.05 $\mu$m was used as a positive electrode active material and a composition of carbon black and multi-walled carbon nanotubes (weight ratio of 3:7) having the characteristics as described in Table 1 below were used as a conductive material to prepare positive electrodes of Examples 1a to 4a and Comparative Examples 1a to 8a.

For the positive electrode, the lithium nickel-based oxide, the conductive material, and a PVDF binder were mixed at a weight ratio of 97.0:1.2:1.8, and an N-methylpyrrolidone solvent was added such that the solid content was 72%, and mixed using a homogenizer at 2,500 rpm for 1 hour to prepare a positive electrode slurry. Thereafter, the slurry was applied onto one surface of an aluminum current collector, dried at 130 °C, and rolled twice at a nip pressure of 2,000 kgf/cm using roll-to-roll rolling equipment.

[Table 1]

| | Carbon black $D_{50}^{CB}$ | Carbon black $BET_{CB}$ | Carbon black $D_{50}^{CNT}$ | Carbon black $BET_{CNT}$ | $(BET_{CB})$ / $(BET_{CNT})$ | Porosit y (%) |
|---|---|---|---|---|---|---|
| Example 1a | 0.61 | 251 | 1.12 | 185 | 1.36 | 26.0 |
| Example 2a | 0.65 | 260 | 1.85 | 250 | 1.04 | 26.1 |
| Example 3a | 0.82 | 299 | 1.12 | 185 | 1.62 | 25.9 |
| Example 4a | 0.85 | 302 | 1.85 | 250 | 1.21 | 25.8 |
| Comparative Example 1a | 0.15 | 65 | 1.12 | 185 | 0.35 | 26.1 |
| Comparative Example 2a | 2.54 | 634 | 1.12 | 185 | 3.43 | 26.0 |
| Comparative Example 3a | 0.82 | 299 | 0.8 | 120 | 2.49 | 25.9 |
| Comparative Example 4a | 0.82 | 299 | 3.45 | 601 | 0.50 | 26.2 |
| Comparative Example 5a | 0.15 | 65 | - | - | - | 25.8 |
| Comparative Example 6a | 0.82 | 299 | - | - | - | 26.2 |
| Comparative Example 7a | - | - | 1.12 | 185 | - | 26.1 |
| Comparative Example 8a | - | - | 3.45 | 601 | - | 26.0 |

Examples 1b to 4b and Comparative Examples 1b to 8b.

A single particle-type lithium iron phosphate $LiFePO_4$ having a $D_{50}$ of 1.1 $\mu$m and nodules with a $D_{mean}$ of 0.2 $\mu$m was used as a positive electrode active material and a composition of carbon black and carbon nanotubes (weight ratio of 3:7) having the characteristics as described in Table 2 below were used as a conductive material to prepare positive electrodes of Examples 1b to 4b and Comparative Examples 1b to 8b.

The positive electrode active material, carbon black, and a PVDF binder were mixed in an N-methylpyrrolidone solvent at a weight ratio of 97.0:1.2:1.8 to prepare a positive electrode slurry (15,000 mPa.s), and the slurry was applied onto one surface of an aluminum current collector, dried at 130 °C, and rolled at a nip pressure of 2,000 kgf/cm to prepare positive electrodes.

[Table 2]

| | Carbon black $D_{50}^{CB}$ | Carbon black $BET_{CB}$ | Carbon black $D_{50}^{CNT}$ | Carbon black $BET_{CNT}$ | $(BET_{CB})$ / $(BET_{CNT})$ | Porosit y (%) |
|---|---|---|---|---|---|---|
| Example 1b | 0.61 | 251 | 1.12 | 185 | 1.36 | 21.1 |
| Example 2b | 0.65 | 260 | 1.85 | 250 | 1.04 | 22.0 |
| Example 3b | 0.82 | 299 | 1.12 | 185 | 1.62 | 21.4 |
| Example 4b | 0.85 | 302 | 1.85 | 250 | 1.21 | 21.9 |
| Comparative Example 1b | 0.15 | 65 | 1.12 | 185 | 0.35 | 22.0 |
| Comparative Example 2b | 2.54 | 634 | 1.12 | 185 | 3.43 | 21.8 |
| Comparative Example 3b | 0.82 | 299 | 0.8 | 120 | 2.49 | 21.5 |
| Comparative Example 4b | 0.82 | 299 | 3.45 | 601 | 0.50 | 22.5 |
| Comparative Example 5b | 0.15 | 65 | - | - | - | 21.3 |
| Comparative Example 6b | 0.82 | 299 | - | - | - | 21.4 |
| Comparative Example 7b | - | - | 1.12 | 185 | - | 21.8 |
| Comparative Example 8b | - | - | 3.45 | 601 | - | 22.0 |

1) $D_{mean}$ ($\mu$m) is calculated by taking an average value of the particle sizes of individual nodules in approximately 30 particles containing at least one nodule, as captured by scanning electron microscopy (SEM) at 5.0 K magnification for positive electrode active material particles.

2) Volume cumulative average particle size $D_{50}$ ($\mu$m) was measured in a way that sample powder was dispersed in a dispersion medium, the dispersion medium was introduced into a laser diffraction particle size measurement instrument (Mastersizer 3000, Malvern) to obtain a volume accumulated particle size distribution graph, and the particle size at 50% of the volume accumulation was calculated.

3) Number cumulative average particle sizes ($\mu$m) $D_{50}^{CNT}$ and $D_{50}^{CB}$ were measured in a way that powder of carbon nanotubes and carbon black was dispersed in a dispersion medium, the dispersion medium was introduced into a laser diffraction particle size measurement instrument (Mastersizer 3000, Malvern) to obtain a graph of number cumulative particle size distribution excluding volume, and the particle size at 50% of the number accumulation was calculated.

4) Specific surface area ($m^2$/g) was measured through a BET method, and was calculated from an amount of nitrogen gas adsorbed at a liquid nitrogen temperature (77 K) using BELSORP-mino II from BEL JAPAN, INC.

## Experimental Example 1: Evaluation of resistance characteristics

Artificial graphite was used as a negative electrode active material. A negative electrode was prepared including a negative electrode composite layer containing the negative electrode active material, CMC and SBR as negative electrode binders, and carbon black as a negative electrode conductive material at a weight ratio of 95.6:1.1:2.3:1.0. The negative electrode composite layer had a weight loading of 265.8 mg/25cm$^2$ and a thickness of 78.5 $\mu$m, and copper foil having a thickness of 10 $\mu$m was used as the negative electrode current collector.

The positive electrodes of Examples and Comparative Examples, the negative electrode, and a porous polyethylene separator were assembled using a winding method, and an electrolyte (ethylene carbonate (EC)/ethyl methyl carbonate (EMC) = 3/7 (volume ratio) and lithium hexafluorophosphate (1 mole of LiPF6) were injected into the assembled battery to prepare a lithium secondary battery.

The lithium secondary battery was charged up to 4.2 V at a C-rate of 0.1 C and then discharged up to 2.5 V to perform an activation process.

The lithium secondary battery was charged and discharged, and then fully charged and discharged again while applying 2.5 C pulse current for a specific period of time according to changes in SOC, and surface resistance (resistance for 0.1 seconds), charge transfer resistance (resistance for 0.1-30 seconds), and diffusion resistance (resistance for 30 seconds) were measured, and the results are shown in Tables 3 and 4.

## Experimental Example 2: Evaluation of lifespan characteristics

Each lithium secondary battery prepared in Experimental Example 1 above was charged up to 4.25 V in CCCV mode at 0.2 C (end current: 1/20 C). Thereafter, the lithium secondary battery was charged up to 4.25 V at a constant current of 0.33 C at 45 °C, and discharged up to 2.5 V at a constant current of 0.33 C, which was set as one cycle, and resistance (DCIR) and charge/discharge capacity were measured during 100 charge-discharge cycles. Using the measurement results, resistance increase rate and capacity retention were calculated as follows and shown in Tables 3 and 4 below.

Resistance Increase Rate (%) = {(resistance after 100 cycles)/(resistance after 1 cycle) $\times$ 100} - 100

Capacity retention (%): = (discharge capacity after 100 cycles/discharge capacity after 1 cycle) $\times$ 100

[Table 3]

|  |  | Surface resistan ce (mQ) | Charge transfer resistan ce (mQ) | Diffusio n resistan ce (mQ) | Capacity retentio n (%) | Resistan ce increase rate (%) |
|---|---|---|---|---|---|---|
|  | Example 1a | 0.931 | 0.349 | 1.279 | 95.4 | 5.1 |
|  | Example 2a | 0.944 | 0.339 | 1.284 | 94.8 | 3.9 |
|  | Example 3a | 0.944 | 0.344 | 1.288 | 95.1 | 5.5 |
|  | Example 4a | 0.931 | 0.362 | 1.293 | 94.5 | 4.2 |

(continued)

|  | Surface resistance (mΩ) | Charge transfer resistance (mΩ) | Diffusion resistance (mΩ) | Capacity retention (%) | Resistance increase rate (%) |
|---|---|---|---|---|---|
| Comparative Example 1a | 1.094 | 0.534 | 1.628 | 88.7 | 11.4 |
| Comparative Example 2a | 1.182 | 0.578 | 1.760 | 90.4 | 7.8 |
| Comparative Example 3a | 1.160 | 0.556 | 1.716 | 82.1 | 13.4 |
| Comparative Example 4a | 1.072 | 0.534 | 1.606 | 79.8 | 12.1 |
| Comparative Example 5a | 1.525 | 0.419 | 1.944 | 88.1 | 21.1 |
| Comparative Example 6a | 1.358 | 0.454 | 1.812 | 85.4 | 20.0 |
| Comparative Example 7a | 1.220 | 0.548 | 1.768 | 91.1 | 9.1 |
| Comparative Example 8a | 1.209 | 0.550 | 1.759 | 90.8 | 10.8 |

[Table 4]

|  | Surface resistance (mΩ) | Charge transfer resistance (mΩ) | Diffusion resistance (mΩ) | Capacity retention (%) | Resistance increase rate (%) |
|---|---|---|---|---|---|
| Example 1b | 0.68 | 0.60 | 1.28 | 97.9 | 1.2 |
| Example 2b | 0.70 | 0.62 | 1.32 | 96.5 | 0.5 |
| Example 3b | 0.69 | 0.59 | 1.28 | 97.4 | 2.2 |
| Example 4b | 0.70 | 0.60 | 1.30 | 97.2 | 2.4 |
| Comparative Example 1b | 0.95 | 0.67 | 1.62 | 95.8 | 5.9 |
| Comparative Example 2b | 0.99 | 0.68 | 1.67 | 95.2 | 6.4 |
| Comparative Example 3b | 0.94 | 0.68 | 1.62 | 95.2 | 6.5 |
| Comparative Example 4b | 0.95 | 0.65 | 1.60 | 95.1 | 7.1 |
| Comparative Example 5b | 0.93 | 0.66 | 1.59 | 92.1 | 6.6 |
| Comparative Example 6b | 0.95 | 0.62 | 1.57 | 92.5 | 7.3 |
| Comparative Example 7b | 0.68 | 0.68 | 1.36 | 94.9 | 8.4 |
| Comparative Example 8b | 0.69 | 0.70 | 1.39 | 95.0 | 6.9 |

Referring to Table 3 above, Examples 1a to 4a, in which a positive electrode having appropriately controlled characteristics of a conductive material was applied were found to exhibit low capacity retention and initial resistance, and a small increase in resistance over cycling, thereby demonstrating excellent performance while Comparative Examples 1a to 8a were found to exhibit a rapid degradation in lifespan and electrode deterioration, resulting in a higher rate of resistance increase than Examples, thereby demonstrating poor performance.

Specifically, Comparative Example 1a shows poor results with a BET ratio of 1 or less, indicating that the specific surface area of carbon nanotubes was larger than that of carbon black, and this shows that the BET of carbon black is too small, leading to the small number of particles per same weight, thereby hindering the formation of a conductive network. In contrast, Comparative Example 2a shows poor lifespan and particularly poor initial resistance compared Examples as the BET of carbon black is too large with a BET ratio greater than 3.4, resulting in the increased number of particles and subsequent side reactions, outweighing the benefits of improved performance.

Furthermore, Comparative Example 3a shows the results that the formation of a long-length conductive network connection path was not successful with carbon nanotubes having a number cumulative average particle size of less than 0.9 μm while Comparative Example 4a shows the results that the specific surface area of multi-walled carbon nanotubes was too large, practically approaching the level of the specific surface area of single-walled carbon nanotubes, leading to significantly strong agglomeration and subsequent poor dispersion, and this resulted in non-uniform distribution within an electrode, hindering the proper formation of a conductive network.

In addition, Comparative Examples 5a and 6a are examples that include only carbon black, and were found that a conductive path was not properly formed, resulting in poor resistance and lifespan, highlighting the limitations of carbon black as a conductive material. In addition, Comparative Examples 7a and 8a are examples that use only carbon nanotubes, and were found that, though considerably inferior in terms of unit price competitiveness compared to Examples, a conductive path was not properly formed due to the failure to fill pores between active material particles with carbon black, resulting in relatively poor resistance and lifespan characteristics compared to Examples.

In addition, even referring to Examples 1b to 4b and Comparative Examples 1b to 8b in Table 4, which are the results of tests conducted by changing the active material to lithium iron phosphate, the results and tendencies showed similar trends to those observed in Table 3, indicating that controlling the type and properties of the conductive material to satisfy the specific surface area ratio of carbon nanotubes and carbon black may greatly contribute to the formation of a conductive path.

**Claims**

1. A positive electrode having a positive electrode composite layer, comprising a positive electrode active material, carbon nanotubes, and carbon black, disposed on a current collector, and satisfying Equation 1 below,

   wherein the carbon nanotubes have a number cumulative average particle size $D_{50}^{CNT}$ of 0.9 $\mu$m to 4.0 $\mu$m,

   $$[Equation\ 1]$$

   $$1.0 < (BET_{CB})/(BET_{CNT}) \leq 3.4$$

   wherein in Equation 1 above,
   $BET_{CB}$ is a BET specific surface area (m$^2$/g) of the carbon black, and $BET_{CNT}$ is a BET specific surface area (m$^2$/g) of the carbon nanotubes.

2. The positive electrode of claim 1, wherein in Equation 1 above, $(BET_{CB})/(BET_{CNT})$ ranges from 1.1 to 3.0.

3. The positive electrode of claim 1, wherein $BET_{CB}$ ranges from 110 m$^2$/g to 350 m$^2$/g.

4. The positive electrode of claim 1, wherein $BET_{CNT}$ ranges from 100 m$^2$/g to 300 m$^2$/g.

5. The positive electrode of claim 1, wherein the carbon black has a number cumulative average particle size $D_{50}^{CB}$ of 0.2 $\mu$m to 1.2 um.

6. The positive electrode of claim 1, wherein the carbon nanotubes and the carbon black are provided in a weight ratio of 85:15 to 55:45.

7. The positive electrode of claim 1, wherein the positive electrode active material is a single particle-type positive electrode active material, and
   the positive electrode active material comprises at least one selected from the group consisting of a lithium nickel-based oxide and a lithium metal phosphate-based compound.

8. The positive electrode of claim 1, wherein the positive electrode active material is a single particle-type positive electrode active material comprising 30 or fewer nodules,
   the nodules having an average particle size $D_{mean}$ of 0.2 $\mu$m to 3.0 um.

9. The positive electrode of claim 1, wherein the positive electrode active material is a single particle-type positive electrode active material comprising 30 or fewer nodules, and
   a $D_{50}/D_{mean}$ ratio ranges from 1 to 10, where $D_{50}/D_{mean}$ is defined as a ratio of volume cumulative average particle size $D_{50}$ to average particle size $D_{mean}$ of nodules.

10. The positive electrode of claim 1, wherein the positive electrode active material comprises a single particle-type lithium nickel-based oxide,

    the single particle-type lithium nickel-based oxide having a composition represented by Formula 1 below:

[Formula 1]          $Li_{1+x}Ni_aCo_bM^1_eM^2_dO_{2-e}X_e$

wherein in Formula 1 above, $M^1$ comprises at least one selected from Mn and Al, $M^2$ comprises at least one selected from the group consisting of W, Zr, Y, Ba, Ca, Ti, V, Mg, Ta, and Nb, X comprises at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

11. The positive electrode of claim 1, wherein the positive electrode active material comprises a lithium metal phosphate-based compound,

the lithium metal phosphate-based compound having a composition represented by Formula 2 below:

[Formula 2]          $Li_{1+x}[Fe_{1-y}M_y]PO_4$

wherein in Formula 2 above, M comprises at least one selected from the group consisting of Mn, Co, Ni, Al, Mg, and Ti, and x and y satisfy $-0.5 \leq x \leq 0.5$ and $0 \leq y < 1$.

12. The positive electrode of claim 1, wherein the carbon nanotubes and the carbon black are provided in a total amount of 0.4 wt% to 2.5 wt% with respect to a total weight of the positive electrode composite layer.

13. The positive electrode of claim 1, wherein the positive electrode active material is provided in an amount of 93.0 wt% to 99.0 wt% with respect to a total weight of the positive electrode composite layer.

14. The positive electrode of claim 1, wherein the positive electrode composite layer further comprises a binder.

15. A lithium secondary battery comprising the positive electrode of claim 1.

## INTERNATIONAL SEARCH REPORT

| International application No. |
|---|
| **PCT/KR2024/014710** |

### A. CLASSIFICATION OF SUBJECT MATTER

**H01M 4/131**(2010.01)i; **H01M 4/62**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 10/052(2010.01); H01M 10/0525(2010.01); H01M 4/133(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 탄소나노튜브(carbon nanotube, CNT), 카본블랙(carbon black), 입경(particle size), BET 비표면적(BET surface area), 단입자(single particle)

### C. DOCUMENTS CONSIDERED TO BE RELEVANT

| Category* | Citation of document, with indication, where appropriate, of the relevant passages | Relevant to claim No. |
|---|---|---|
| Y | KR 10-2015-0061874 A (LG CHEM, LTD.) 05 June 2015 (2015-06-05)<br>See claims 1, 2, 6 and 12; and paragraphs [0042]-[0044], [0046], [0059], [0069] and [0091]-[0096]. | 1-15 |
| Y | KR 10-2021-0006377 A (DENKA COMPANY LIMITED) 18 January 2021 (2021-01-18)<br>See claim 1; and paragraphs [0037], [0044] and [0060]. | 1-15 |
| Y | KR 10-2023-0107145 A (LG ENERGY SOLUTION, LTD.) 14 July 2023 (2023-07-14)<br>See claims 1, 2, 5 and 6; and paragraphs [0005], [0019], [0020], [0121] and [0122]. | 7-11 |
| A | KR 10-2023-0047787 A (ADVANCED NANO PRODUCTS CO., LTD.) 10 April 2023 (2023-04-10)<br>See abstract; and claims 1-19. | 1-15 |
| A | KR 10-2020-0073241 A (DENKA COMPANY LIMITED et al.) 23 June 2020 (2020-06-23)<br>See abstract; and claims 1-5. | 1-15 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014710**

| Patent document cited in search report | | | Publication date (day/month/year) | Patent family member(s) | | | Publication date (day/month/year) |
|---|---|---|---|---|---|---|---|
| KR | 10-2015-0061874 | A | 05 June 2015 | KR | 10-1764455 | B1 | 03 August 2017 |
| KR | 10-2021-0006377 | A | 18 January 2021 | CN | 112106233 | A | 18 December 2020 |
| | | | | CN | 112106233 | B | 19 September 2023 |
| | | | | EP | 3767709 | A1 | 20 January 2021 |
| | | | | EP | 3767709 | A4 | 19 May 2021 |
| | | | | JP | 7337049 | B2 | 01 September 2023 |
| | | | | US | 2021-0119206 | A1 | 22 April 2021 |
| | | | | WO | 2019-216275 | A1 | 14 November 2019 |
| KR | 10-2023-0107145 | A | 14 July 2023 | CN | 118511323 | A | 16 August 2024 |
| | | | | EP | 4443563 | A1 | 09 October 2024 |
| | | | | JP | 2024-545475 | A | 06 December 2024 |
| | | | | US | 2023-0223526 | A1 | 13 July 2023 |
| | | | | WO | 2023-132685 | A1 | 13 July 2023 |
| KR | 10-2023-0047787 | A | 10 April 2023 | | None | | |
| KR | 10-2020-0073241 | A | 23 June 2020 | CN | 109659506 | A | 19 April 2019 |
| | | | | CN | 111316476 | A | 19 June 2020 |
| | | | | CN | 116031384 | A | 28 April 2023 |
| | | | | EP | 3686965 | A1 | 29 July 2020 |
| | | | | EP | 3686965 | A4 | 28 October 2020 |
| | | | | JP | 7223999 | B2 | 17 February 2023 |
| | | | | KR | 10-2630117 | B1 | 25 January 2024 |
| | | | | US | 2020-0313159 | A1 | 01 October 2020 |
| | | | | WO | 2019-073830 | A1 | 18 April 2019 |

Form PCT/ISA/210 (patent family annex) (July 2022)